**Europäisches Patentamt**

**European Patent Office**

**Office européen des brevets**

(19)

(11) Veröffentlichungsnummer: **0 324 974 B1**

(12) **EUROPÄISCHE PATENTSCHRIFT**

(45) Veröffentlichungstag der Patentschrift:
03.07.91 Patentblatt 91/27

(51) Int. Cl.⁵: **E01H 5/09,** B62D 49/02,
A01B 63/04

(21) Anmeldenummer: **88121656.8**

(22) Anmeldetag: **24.12.88**

(54) **Vorrichtung zum frontseitigen Anbau eines Arbeitsgerätes an einen Kleinschlepper, insbesondere Rasen- und Gartenschlepper.**

(30) Priorität: **21.01.88 US 146650**

(43) Veröffentlichungstag der Anmeldung:
**26.07.89 Patentblatt 89/30**

(45) Bekanntmachung des Hinweises auf die
Patenterteilung:
**03.07.91 Patentblatt 91/27**

(84) Benannte Vertragsstaaten:
**DE FR GB IT SE**

(56) Entgegenhaltungen:
**EP-A- 0 182 229
DE-B- 1 043 692
US-A- 3 440 739
US-A- 3 721 025**

(73) Patentinhaber: **DEERE & COMPANY
1 John Deere Road
Moline, Illinois 61265 (US)**

(72) Erfinder: **Schmid, Steven Lawrence
Rural Route 1 Box 144
Agency Iowa 52530 (US)**
Erfinder: **Hining, Larry Demar
1010 Glenwood
Ottumwa Iowa 52501 (US)**

(74) Vertreter: **Feldmann, Bernhard et al
DEERE & COMPANY European Office, Patent
Department Steubenstrasse 36-42 Postfach
503
W-6800 Mannheim 1 (DE)**

## Beschreibung

Die Erfindung bezieht sich auf eine Vorrichtung zum frontseitigen Anbau eines Arbeitsgerätes an einen Kleinschlepper, insbesondere Rasen- und Gartenschlepper, mit zwei einenends an dem Rahmen des Arbeitsgerätes angreifenden, mit Querabstand zueinander angeordneten, anderenends an der Unterseite des Kleinschleppers anlenkbaren Hubarmen, wobei im frontseitigen Bereich des Kleinschleppers mit Abstand zu den schlepperseitigen Anlenkstellen der Hubarme zwei Tragarme am Kleinschlepper vorgesehen sind, an denen jeweils eine Strebe angreift, die mit je einer an einem Hubarm angelenkten Hubstrebe beweglich verbunden ist, und wobei die Hubarme aus einer abgesenkten Stellung in eine Transportstellung verstellbar sind.

Kleinschlepper sind in der Regel so ausgebildet, daß sie keine Rahmenteile aufweisen, an die ein Arbeitsgerät angebaut werden kann. Bei der Vorrichtung zum frontseitigen Anbau eines Arbeitsgerätes, von der die Erfindung ausgeht (US-A-3 721 025), ist deshalb unter dem Kleinschlepper ein gesonderter Rahmen vorgesehen, an den das Arbeitsgerät angebaut werden kann. Im einzelnen sind die Tragarme an diesem Rahmen vor dem Ackerschlepper vertikal nach oben zeigend angeordnet und lagern einen Handhebel, auf dem wiederum die Streben fest angeordnet sind, die über die Hubstreben mit den Hubarmen gelenkig in Verbindung stehen. Damit liegt auch der Handhebel weit vorne, teilweise vor dem Kleinschlepper, ist somit schlecht erreichbar, und zum Ausheben des Arbeitsgerätes in die Transportstellung sind aufgrund der ungünstigen Hebelanordnungen große Kräfte erforderlich.

Die mit der Erfindung zu lösende Aufgabe wird darin gesehen, die Vorrichtung zum frontseitigen Anbau eines Arbeitsgerätes an einen Kleinschlepper so auszubilden, daß das Arbeitsgerät leicht an- und abgebaut werden kann, wobei die Kräfte zum Verstellen des Arbeitsgerätes aus der Arbeitsstellung in die Transportstellung relativ klein gehalten werden.

Diese Aufgabe ist nach der Erfindung dadurch gelöst worden, daß die Hubstreben als sich in Fahrtrichtung erstreckende und um ihre Anlenkstellen an die Streben auf- und abschwenkbare Hebelarme ausgebildet sind, wobei an mindestens einer Hubstrebe mit Abstand zu ihrer Anlenkstelle an dem zugehörigen Hubarm ein sich nach oben erstreckender Teil fest angeordnet ist, an dem ein Zugglied angreift. Auf diese Weise werden günstige Hebelarme geschaffen, die es ermöglichen, das Arbeitsgerät mit einem geringen Kraftaufwand aus seiner Arbeitsstellung in die Transportstellung zu heben, und zum Anbau der Vorrichtung sind am Kleinschlepper nur minimale strukturelle Änderungen vorzunehmen.

Nach der Erfindung kann das Zugglied als Hubstange ausgebildet sein und mit seinem der Anlenkstelle an dem sich nach oben erstreckenden Teil abgelegenen Ende an einem verschwenkbaren Handhebel angreifen, wobei die Hubstrebe derart an dem zugehörigen Hubarm angelenkt ist, daß beim Verschwenken des Handhebels zum Verstellen der Hubarme in die Transportstellung die Hubstrebe im Uhrzeigerdrehsinn und ihre Anlenkstelle an die Strebe auf einem Kreisbogen um die Anlenkstelle der Strebe an den Tragarm bewegt wird.

Ein paralleles Ausrichten des Arbeitsgerätes läßt sich dann erreichen, wenn nach einem weiteren Vorschlag der Erfindung die Streben längenveränderlich ausgebildet sind. Wenn nach der Erfindung ferner der Handhebel einenends in einem der Hubarme gelagert ist, wird zusätzlich erreicht, daß am Kleinschlepper keine besonderen Vorkehrungen zu treffen sind, um den Handhebel schlepperseitig zu lagern. Im einzelnen ist der Handhebel endseitig mit einer Platte versehen, die einen Schwenkzapfen aufweist, der in ein mit mindestens einem Hubarm verbundenes und seitlich nach außen geführtes Rohrstück einsetzbar ist, wobei unterhalb des Schwenkzapfens an der Platte ein Führungsstift vorgesehen ist, der in einer einenends offenen Schlitzführung einer mit dem Rohrstück verbundenen Platte geführt ist, die eine mit einem Riegel an dem Handhebel zusammenwirkende Zunge zum Feststellen des Handhebels in einer seiner Endstellungen aufweist. Auf diese Weise kann der Handhebel beim Abbau der Anbauvorrichtung leicht entfernt werden, und es ist lediglich erforderlich, die Verbindung mit der Hubstange zu lösen, wonach der Handhebel seitlich aus dem Rohrstück herausgezogen werden kann.

Die Kräfte zum Ausheben des Anbaugerätes lassen sich noch dadurch verringern, daß nach einem weiteren Vorschlag der Erfindung an einem Hubarm eine Feder angreift, die anderenends über einen Seilzug an dem sich nach oben erstreckenden Teil angreift. Hierzu können beide Hubstreben mit einem sich nach oben erstreckenden Teil versehen sein, die über einen Quersteg miteinander in Verbindung stehen, wobei der Quersteg eine Einstellschraube mit einer Stellmutter aufnimmt, an die der über eine Führungsscheibe gezogene Seilzug an seinem der Feder abgelegenen Ende angreift. Damit sind auch die Hubarme starr miteinander verbunden, und durch Verstellung der Einstellschraube kann sich die Stellmutter längs verschieben, wodurch eine zusätzliche Spannung der Federn erreicht wird. Schließlich wird nach der Erfindung noch vorgeschlagen, daß die Tragarme mit ihren rückwärtigen oberen Enden gegen die Unterseite einer Schlepperachse anliegen und mit je einem an der Schlepperachse befestigten Hängebock verbindbar sind, so daß auch die Tragarme leicht von dem Kleinschlepper entfernt werden können, wenn sie nicht benötigt werden.

In der Zeichnung ist ein nachfolgend näher erläutertes Ausführungsbeispiel der Erfindung dargestellt. Es

2

zeigt :

Fig. 1     einen Kleinschlepper mit angebautem Arbeitsgerät, das sich in seiner abgesenkten Arbeitsstellung befindet,

Fig. 2     eine ähnliche Darstellung wie in Fig. 1, jedoch mit in die Transportstellung angehobenem Arbeitsgerät,

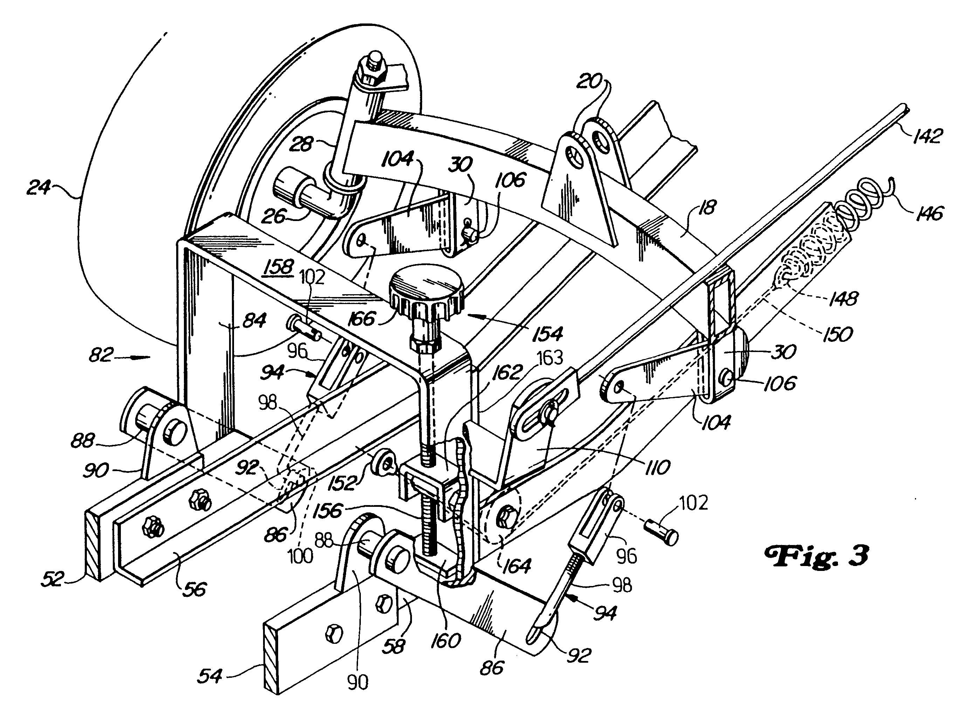

Fig. 3     Einzelteile der Anbauvorrichtung in perspektivischer Darstellung und

Fig. 4     die Anlenkung von Hubarmen an den Kleinschlepper mit einem Handhebel zum Verstellen des Arbeitsgerätes.

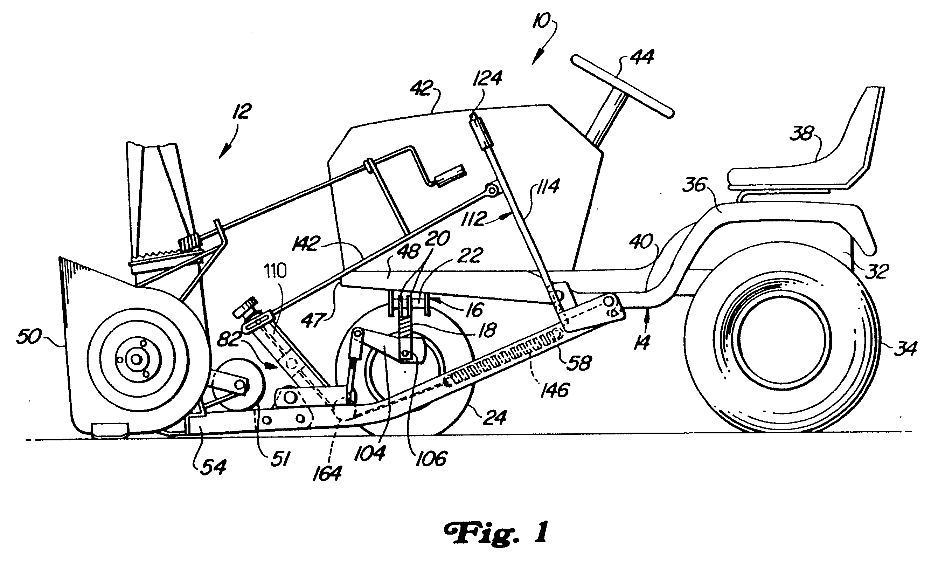

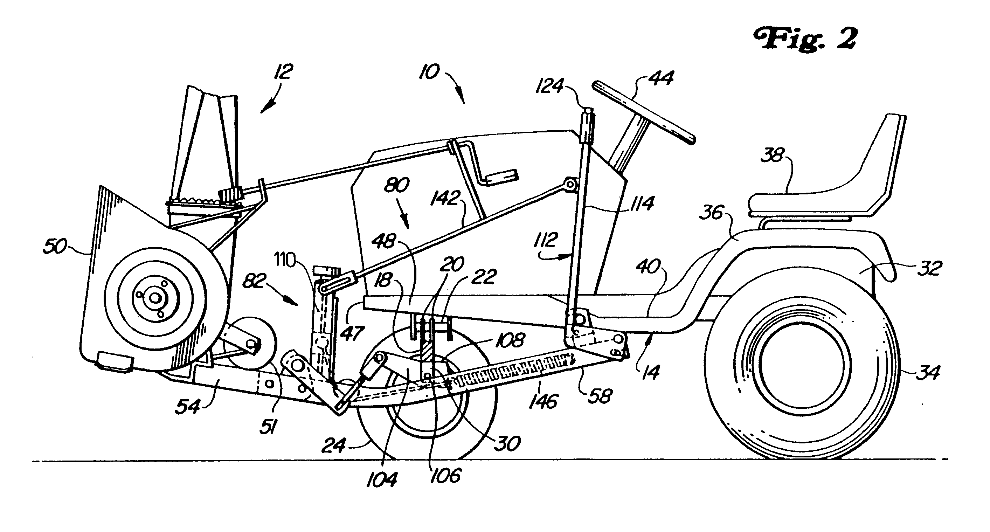

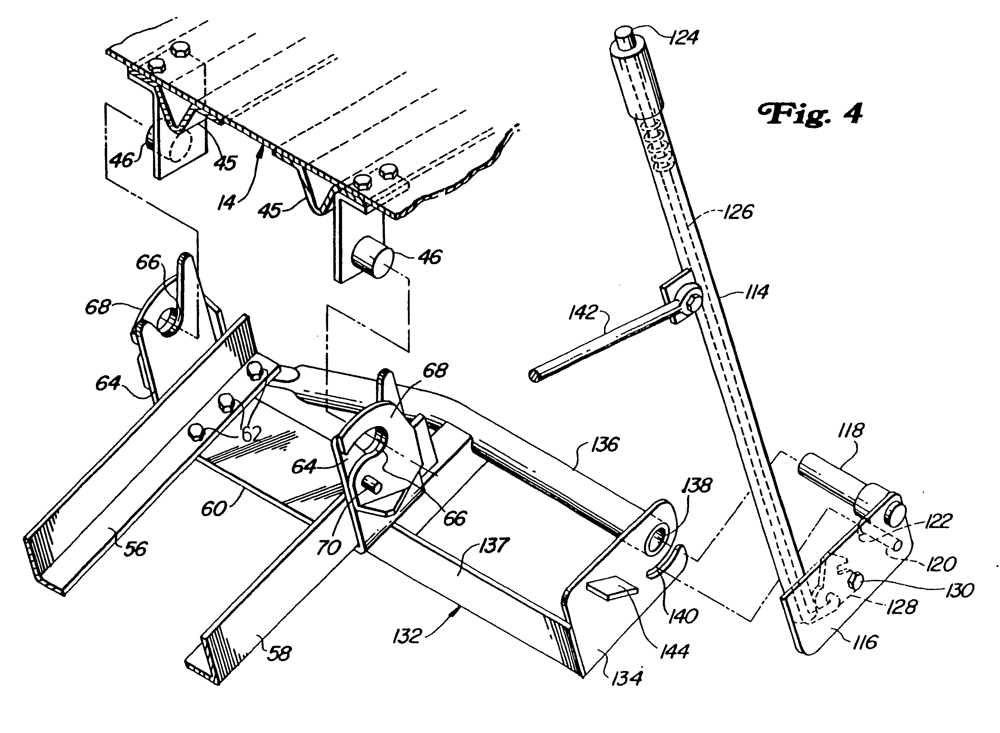

In den Figuren 1, 2 und teilweise 3 ist ein Kleinschlepper 10 in Form eines Rasen- und Gartenschleppers dargestellt, an dem frontseitig ein als Schneefräse ausgebildetes Anbaugerät 12 angeschlossen ist. Der Kleinschlepper 10 ist relativ klein und mit einem einstückig ausgebildeten, gepreßten, metallischen Rahmen 14 versehen, der quer verlaufende Winkelteile aufweist, die mittig an die vordere Unterseite anschraubbar sind und eine Aufhängevorrichtung 16 für eine Achse 18 bilden. Die gebogen ausgebildete Achse 18 wiederum ist mit einem zentralen Befestigungsteil 20 versehen, der um einen horizontalen, sich in Längsrichtung erstreckenden Zapfen 22 verschwenkbar ist, der seinerseits von der Aufhängevorrichtung 16 aufgenommen ist. Lenkbare Vorderräder 24 sind an Achsschenkeln 26 vorgesehen, die wiederum in vertikal gerichteten Hülsen 28 drehbar sind, die mit den gegenüberliegenden Enden der Vorderachse verschweißt sind. Ein Paar U-förmig ausgebildeter Hängeböcke 30 ist beispielsweise durch Schweißen so angeordnet, daß sie von der Unterseite der Achse 18 nach unten weisen, und zwar an Stellen, die einen gleichen Abstand von dem Befestigungsteil 20 aufweisen. Ein Achsgehäuse 32 ist an eine mittige Unterseite des Rahmens 14 angeschraubt und nimmt in der Zeichnung nicht dargestellte Antriebsachsen auf, an denen wiederum rückwärtige Antriebsräder 34 angeschlossen werden können. Der Rahmen ist so geformt, daß er auch Kotflügel 36 bildet, die sich über die Antriebsräder 34 erstrecken, wobei des weiteren noch ein Fahrersitz 38 oben auf dem Rahmen zwischen den Kotflügeln aufschraubbar ist. Die Kotflügel gehen an ihren vorderen Enden in zwei Fußstellflächen 40 über. Auch eine Verbrennungsmaschine, die der Einfachheit halber in der Zeichnung nicht dargestellt ist, ist noch oben in einem vorderen Bereich mit dem Rahmen verbunden und innerhalb eines Gehäuses 42 angeordnet. Der rückwärtige Teil des Gehäuses 42 bildet ein Armaturenbrett zum Aufnehmen verschiedener Betätigungselemente, von denen lediglich in der Zeichnung ein Lenkrad 44 wiedergegeben ist. Lediglich in Fig. 4 ersichtlich sind zwei mit Querabstand zueinander angeordnete, nach oben hin offene Profilteile 45 zu erkennen, die Versteifer für den Rahmen 14 bilden. Diese Profilteile 45 sind aus Metallblech geformt, im Querschnitt hutförmig ausgebildet und so angeschraubt, daß sie sich in Längsrichtung unter einem mittigen Teil des Rahmens von der Aufhängevorrichtung 16 bis etwa zu den Fußstellflächen 40 erstrecken. An den Rahmen 14 sind zusammen mit den Profilteilen 45 an entsprechenden Stellen innen von den Fußstellflächen zwei L-förmig ausgebildete Geräteanschlußlaschen vorgesehen, die nach außen vorstehende Geräteanschlußzapfen 46 aufweisen. Eine Stoßstange 47 des Kleinschleppers wird durch einen nach unten abgebogenen Flansch 48 gebildet, der über die Peripherie des Rahmens 14 gebildet ist. Aus Vorstehendem geht hervor, daß weder der Rahmen 14 noch die Profilteile 45 besonders starke Rahmenteile bilden oder daß Laschen an ihnen angeordnet werden können, um ein Gerät oder ein Hubsystem für ein solches Gerät aufnehmen zu können.

Aus den Figuren 1 und 2 geht ferner hervor, daß die Schneefräse 12 mit einem Gehäuse 50 versehen ist, das dazu dient, die Arbeitswerkzeuge, die in der Zeichnung nicht dargestellt sind, wie z.B. eine Schnecke und Fräswerkzeuge, aufzunehmen. Eine nicht dargestellte Antriebswelle ist an der rückwärtigen Seite des Gehäuses 50 vorgesehen, und an den rechten und linken Enden dieser Welle sind Kettenräder angeschlossen, um die Schnecke und die Fräswerkzeuge und eine Riemenscheibe 51 anzutreiben. Die Riemenscheibe 51 ist über einen Riementrieb mit einer weiteren Riemenscheibe verbunden, die an einer Ausgangswelle der Verbrennungsmaschine des Kleinschleppers angeordnet ist, wobei der Riementrieb normalerweise von dem Anbaugerät getragen wird und sich bis unter die Unterseite des Kleinschleppers erstreckt, aber der Einfachheit halber in der Zeichnung nicht dargestellt ist. Einzelheiten einer solchen Anordnung gehen aus der EP-A-0 300 437 hervor. Mit dem unteren rückwärtigen Teil des Gehäuses 50 sind sich parallel erstreckende, Querabstand zueinander aufweisende, nach rückwärts gerichtete linke und rechte Flacheisen 52 und 54 verbunden. Sich längs erstreckende Winkelteile bilden rechte und linke Hubarme 56 und 58, deren vordere Enden fest mit den Flacheisen 52 und 54 verschraubt sind, so daß die Hubarme rückwärtige Verlängerungen der Flacheisen 52 und 54 bilden. Ein U-förmig ausgebildeter Befestigungsbügel 60 nimmt die rückwärtigen Teile der Hubarme 56 und 58 auf, beispielsweise über Schrauben 62. Die Schenkel 64 des Befestigungsbügels 60 sind nach oben gerichtet und mit nach oben offenen, V-förmig ausgebildeten Aufnahmestücken 66 versehen, die wiederum von den Geräteanschlußzapfen 46 aufgenommen werden, wobei die Arretierung über abklappbare Riegel 68 erfolgt, die schwenkbar an nach außen vorstehenden Zapfen 70 vorgesehen sind, die ihrerseits an die Schenkel 64 angeschlossen sind. Damit ist das Anbaugerät 12 bzw. die Schneefräse so angeordnet, daß sie um eine horizontal und quer verlaufende, durch die Geräteanschlußzapfen 46 gebildete Achse nach oben und unten verschwenkt werden kann. Solche Anbauvorrichtungen sind mehr oder weniger herkömmlicher Art.

Das Verstellen des Arbeitsgerätes 12 aus der Arbeitsstellung (Fig. 1) in die Transportstellung (Fig. 2) bzw. umgekehrt erfolgt über eine Hebevorrichtung 80. Im einzelnen besteht die Hebevorrichtung 80 aus einer Kurbelwelle 82 in der Form eines umgekehrt U-förmig ausgebildeten Bügels 84 mit gegenüberliegenden Schenkeln, an denen zwei nach unten und rückwärts gerichtete Hubstreben 86 angeschlossen sind, deren vordere Enden zwei nach innen gerichtete Schwenkzapfen 88 aufnehmen, die drehbar in nicht dargestellten Lagern von zwei nach oben gerichteten Böcken 90 aufgenommen werden, die an den Flacheisen 52 und 54 fest angeordnet sind. Die rückwärtigen Enden der Hubstreben sind mit Längsschlitzen 92 versehen. Auf diese Weise kann die Kurbelwelle 82 um eine horizontale, quer gerichtete, durch die Schwenkzapfen 88 gebildete Achse verschwenken. Zwei längeneinstellbare Streben 94 sind mit einem Gabelkopf 96 versehen, der auf das mit Gewinde versehene Ende einer Stange 98 jeweils aufschraubbar ist, wobei die Stange 98 endseitig mit einem Haken 100 versehen ist, der wiederum in den zugehörigen Längsschlitz 92 in den Hubstreben 86 eingreift. Die Gabelköpfe 96 wiederum sind über Stifte 102 mit den frontseitigen Enden von Tragarmen 104 verbunden, wobei die Tragarme 104 entsprechende rückwärtige Endteile aufweisen, die ihrerseits in den entsprechenden Hängeböcken 30 aufgenommen und dort über Bolzen 106 gesichert sind. Die Tragarme 104 weisen eine Oberfläche 108 auf, die gegen die Unterseite der Achse 18 anliegt, so daß die Tragarme 104 gehindert sind, um die Bolzen 106 zu verschwenken. Mit der linken Seite des Bügels 84 ist noch ein nach oben und nach außen gerichteter Schwenkhebel 110 verbunden. Eine handbetätigbare Zugvorrichtung 112 ist vorgesehen, um das Gehäuse 50 des Arbeitsgerätes wahlweise anheben oder absenken zu können zwischen einer abgesenkten Arbeitsposition und einer angehobenen Transportstellung, wie sie in den Figuren 1 und 2 dargestellt sind. Insbesondere aus Fig. 4 ist erkennbar, daß die Zugvorrichtung 112 einen nach oben gerichteten Handhebel 114 aufweist, dessen unteres Ende mit dem vorderen inneren Teil einer sich in Längsrichtung erstreckenden Platte 116 verschweißt ist. Ein sich nach innen erstreckender Schwenkzapfen 118 ist im rückwärtigen Bereich der Platte 116 vorgesehen, und unterhalb des Schwenkzapfens 118 ist an der Platte 116 noch ein nach innen gerichteter Führungsstift 120 zum Halten der Platte angeordnet, wobei der Führungsstift 120 mit einem Kopf 122 an seinem inneren Ende versehen ist. Ein über den Daumen betätigbarer Knopf 124 ist am oberen Ende des Handhebels 114 vorgesehen und steht in Wirkverbindung über eine Stange 126, die in dem Handhebel vorgesehen ist, mit einem Riegel 128, der über einen Stift 130 schwenkbar an der Platte 116 angelenkt ist. Ein Tragrahmen 132 ist mit den rückwärtigen Enden der Hubarme 56 und 58 verbunden und erstreckt sich quer derart, daß ein äußeres Ende über die linke Fußstellfläche 40 des Kleinschleppers nach außen vorsteht. Das äußere Ende des Tragrahmens 132 wird wiederum durch eine sich in Längsrichtung erstreckende, vertikal verlaufende Platte 134 begrenzt, deren rückwärtiger Teil mit einem horizontalen, sich quer erstreckenden Teil eines Rohrstückes 136 verbunden ist und deren vorderer Bereich an eine quer verlaufende, sich vertikal erstreckende Platte 137 angeschlossen ist. Eine Öffnung 138 in der Platte 134 nimmt ein offenes äußeres Ende des Rohrstückes 136 auf, so daß dieses eine rohrförmige Aufnahme bildet, in der der Schwenkzapfen 118 drehbar aufgenommen werden kann. In der Platte 134 unterhalb der Aufnahme ist noch eine Schlitzführung 140 vorgesehen, die bogenförmig um die Aufnahme mit einem Radius angeordnet ist, der dem Abstand zwischen dem Führungsstift 120 und dem Schwenkzapfen 118 entspricht. Die Schlitzführung 140 ist an ihrem rückwärtigen Ende an der Platte 134 offen, so daß hier ein Eingang für den Führungsstift 120 gebildet wird, der dadurch in der Schlitzführung 140 aufgenommen werden kann. Die Länge der Schlitzführung 140 ist derart gewählt, daß der Führungsstift 120 in der Schlitzführung 140 über den vollen Schwenkbereich des Handhebels 114 verbleibt, wenn das Gehäuse 50 des Arbeitsgerätes zwischen seiner Arbeits- und Transportstellung über eine Hubstange 142 verstellt wird, die zwischen dem Handhebel 114 und dem Schwenkhebel 110 an der Kurbelwelle 82 vorgesehen ist. Der Kopf 122 des Führungsstiftes 120 ist derart dimensioniert, daß er nicht seitlich aus der Schlitzführung austreten kann, so daß der Handhebel 114 während seines Einsatzes gehalten ist. Eine Zunge 144 ist mit der Platte 134 befestigt, so daß sie von dem Riegel 128 erfaßt werden kann, wenn der Handhebel nach rückwärts verschwenkt wird, um die Schneefräse in ihre Transportstellung zu verstellen.

Zum An- oder Abbau der Schneefräse 12 an den Kleinschlepper 10 ist es erforderlich, daß der Handhebel 114 abgebaut wird, damit die Hubarme 56 und 58 zwischen den Vorderrädern 24 nach vorne gezogen werden können bzw. von vorne eingesetzt werden können. Sobald nun die Hubstange 142 von dem Handhebel 114 gelöst wurde, kann letzterer so weit verschwenkt werden, daß der Führungsstift 120 aus der Schlitzführung 140 austritt, wonach dann der Handhebel 114 nach außen von dem Tragrahmen 142 seitlich abgezogen werden kann. Auf diese Weise ist der Handhebel leicht an- bzw. abbaubar von dem Tragrahmen 132, ohne daß hierfür besondere Werkzeuge erforderlich wären. Eine einstellbare Hubunterstützung ist ebenfalls an dem Arbeitsgerät 12 vorgesehen. Im einzelnen besteht diese Hubunterstützung aus einer Zugfeder 146, die sich längs des rückwärtigen Teils des linken Hubarmes 58 erstreckt, wobei ihr rückwärtiges Ende mit dem Hubarm 58 und ihr vorderes Ende mit einer Öse 148 verbunden ist, die an dem einen Ende eines Seilzuges 150 vorgesehen ist, der eine ähnliche Öse 152 an seinem frontseitigen Ende aufweist. Eine einstellbare Spannvorrichtung 154 ist mit einer von Hand betätigbaren Einstellschraube 156 versehen, die durch den linken Teil eines Quersteges 158 des U-förmigen Bügels 84 geführt ist, wobei ihr oberer Teil drehbar in diesem Quersteg 158 aufgenommen ist und ein unterer Teil drehbar in einer Quernase 160 gehalten ist, die mit dem linken Schenkel des Bügels verbunden ist und sich von diesem aus gesehen nach innen erstreckt. Eine Stellmutter 162 ist von der Einstellschraube 156 aufgenommen und wird durch eine vertikale Platte 163 an einer Drehung gehindert, die ebenfalls mit der linken vorderen Seite des Bügels 84 verbunden ist. Ein nicht sichtbarer Stift am rechten Ende der Stellmutter 162 nimmt die frontseitige Öse 152 des Seilzuges 150 auf. Der Seilzug 150 ist um die untere Seite einer Führungsscheibe 164 geführt, die ihrerseits an dem linken Hubarm 58 hinter der Kurbelwelle 82 aufgenommen ist. Auf diese Weise kann durch Erfassen und Drehen eines Knopfes 166 an der Spitze der Einstellschraube 156 die Stellmutter 162 entweder aufwärts oder abwärts in Abhängigkeit von der Drehrichtung des Knopfes bewegt werden, wodurch die Spannung der Feder 146 erhöht bzw. verkleinert werden kann.

Zur Wirkungsweise der Zugvorrichtung 112 ist noch kurz auf folgendes hinzuweisen. Unter der Annahme, daß die Schneefräse von dem Kleinschlepper 10 abgebaut ist und auf einem relativ ebenen Boden vor dem Kleinschlepper liegt, kann der Anbau damit vorbereitet werden, daß zunächst der Handhebel 114 von dem Tragrahmen 132 entfernt wird. Hierzu wird zunächst die Verbindung der Hubstange 142 mit dem Handhebel gelöst und der Handhebel nach vorne verschwenkt, so daß der Führungsstift 120 aus der Schlitzführung 140 austreten kann. Der Handhebel 114 wird dann seitlich aus dem Tragrahmen 132 herausgezogen. Sobald der Handhebel 114 entfernt ist, wird die Schneefräse über ihre nicht dargestellten Transportträder so bewegt, daß die Hubarme 56 und 58 zwischen den Vorderrädern unterhalb des Kleinschleppers eintreten, bis sie schließlich mit ihren Aufnahmestücken 66 unter den Geräteanschlußzapfen 46 zu liegen kommen. Die Schneefräse wird dann nach unten um ihre Transportträder gekippt, wodurch die Aufnahmen 66 in die Geräteanschlußzapfen 46 eingreifen können. Danach werden die Riegel 68 derart gedreht, daß sie die Geräteanschlußzapfen umfassen und damit sichern. Danach wird der Handhebel 114 wieder in seine Position an dem Tragrahmen 132 verbracht, und die Hubstange 142 wird wieder mit dem Handhebel 114 verbunden. Nachfolgend werden Tragarme 104 in die Hängeböcke 30 eingesetzt und mit diesen verbunden. Die Schneefräse kann dann um die Geräteanschlußzapfen 46 nach oben verschwenkt werden, indem der Handhebel 114 nach rückwärts verschwenkt wird, wodurch eine Verstellung oder Schwenkbewegung nach rückwärts bzw. im Uhrzeigerdrehsinn der Kurbelwelle 82 stattfindet, wobei die Hubstreben 86 sich nach unten bewegen und auf die Streben 94 einen Zug ausüben, wodurch sich die Schneefräse anhebt. Der Handhebel 114 kann so arretiert werden, daß die Schneefräse in ihrer angehobenen Transportstellung durch Manipulation an dem Knopf 124 festgestellt wird, wodurch die Stange 126 bewegt wird und nachfolgend der Riegel 128 in die Zunge 144 eingreift. Sollte nun die Schneefräse nicht richtig ausgerichtet sein, d.h. sollten sich die Hubarme 56 und 58 nicht in der gleichen Ebene befinden, so kann dies dadurch erreicht werden, daß der Riegel 128 wieder gelöst und das Gehäuse auf dem Boden abgesetzt wird, wonach eine oder beide Streben 94 gelöst und die entsprechenden Längeneinstellungen vorgenommen werden. Danach wird oder werden die Streben 94 wieder befestigt. Nachfolgend kann auch die Spannung der Feder eingestellt werden, indem man den Knopf 166 in der entsprechenden Richtung betätigt. Das Hubsystem für das Arbeitsgerät ist danach einsatzfähig.

## Ansprüche

1. Vorrichtung zum frontseitigen Anbau eines Arbeitsgerätes (12) an einen Kleinschlepper (10), insbesondere Rasen- und Gartenschlepper, mit zwei einenends an dem Rahmen des Arbeitsgerätes angreifenden, mit Querabstand zueinander angeordneten, anderenends an der Unterseite des Kleinschleppers anlenkbaren Hubarmen (56, 58), wobei im frontseitigen Bereich des Kleinschleppers mit Abstand zu den schlepperseitigen Anlenkstellen der Hubarme (56, 58) zwei Tragarme (104) am Kleinschlepper (10) vorgesehen sind, an denen jeweils eine Strebe (94) angreift, die mit je einer an einem Hubarm (56, 58) angelenkten Hubstrebe (86) beweglich verbunden ist, und wobei die Hubarme (56, 58) aus einer abgesenkten Stellung in eine Transportstellung verstellbar sind, dadurch gekennzeichnet, daß die Hubstreben (86) als sich in Fahrtrichtung erstreckende und um ihre Anlenkstellen an die Streben (94) auf- und abschwenkbare Hebelarme ausgebildet sind, wobei an mindestens einer Hubstrebe (86) mit Abstand zu ihrer Anlenkstelle (88) an dem zugehörigen Hubarm (56 bzw. 58) ein sich nach oben erstreckender Teil fest angeordnet ist, an dem ein Zugglied (142) angreift.

2. Vorrichtung nach Anspruch 1, dadurch gekennzeichnet, daß das Zugglied als Hubstange (142) ausgebildet ist und mit seinem der Anlenkstelle an dem sich nach oben erstreckenden Teil abgelegenen Ende an einem verschwenkbaren Handhebel (114) angreift.

3. Vorrichtung nach Anspruch 2, dadurch gekennzeichnet, daß die Hubstrebe (86) derart an dem zugehörigen Hubarm (56, 58) angelenkt ist, daß beim Verschwenken des Handhebels (114) zum Verstellen der Hubarme (56, 58) in die Transportstellung die Hubstrebe (86) im Uhrzeigerdrehsinn und ihre Anlenkstelle an die Strebe (94) auf einem Kreisbogen um die Anlenkstelle der Strebe (94) an den Tragarm (104) bewegt wird.

4. Vorrichtung nach Anspruch 1, dadurch gekennzeichnet, daß die Streben (94) längenveränderlich ausgebildet sind.

5. Vorrichtung nach Anspruch 2, dadurch gekennzeichnet, daß der Handhebel (114) einenends in einem der Hubarme (56, 58) gelagert ist.

6. Vorrichtung nach Anspruch 5, dadurch gekennzeichnet, daß der Handhebel (114) endseitig mit einer Platte (116) versehen ist, die einen Schwenkzapfen (118) aufweist, der in ein mit mindestens einem Hubarm (56, 58) verbundenes und seitlich nach außen geführtes Rohrstück (136) einsetzbar ist.

7. Vorrichtung nach Anspruch 6, dadurch gekennzeichnet, daß unterhalb des Schwenkzapfens (118) an der Platte (116) ein Führungsstift (120) vorgesehen ist, der in einer einenends offenen Schlitzführung (140) einer mit dem Rohrstück (136) verbundenen Platte (116) geführt ist, die eine mit einem Riegel (128) an dem Handhebel (114) zusammenwirkende Zunge (144) zum Feststellen des Handhebels (114) in einer seiner Endstellungen aufweist.

8. Vorrichtung nach einem oder mehreren der vorherigen Ansprüche, dadurch gekennzeichnet, daß an einem Hubarm (56, 58) eine Feder (146) angreift, die anderenends über einen Seilzug (150) an dem sich nach oben erstreckenden Teil angreift.

9. Vorrichtung nach einem oder mehreren der Ansprüche 1 bis 7 und Anspruch 8, dadurch gekennzeichnet, daß beide Hubstreben (86) mit einem sich nach oben erstreckenden Teil versehen sind, die über einen Quersteg (158) miteinander in Verbindung stehen, wobei der Quersteg (158) eine Einstellschraube (156) mit einer Stellmutter (162) aufnimmt, an die der über eine Führungsscheibe (164) gezogene Seilzug (150) an seinem der Feder (146) abgelegenen Ende angreift.

10. Vorrichtung nach Anspruch 1, dadurch gekennzeichnet, daß die Tragarme (104) mit ihren rückwärtigen oberen Enden gegen die Unterseite einer Schlepperachse (18) anliegen und mit je einem an der Schlepperachse befestigten Hängebock (30) verbindbar sind.

## Claims

1. Device for front-end mounting of an implement (12) on a small tractor (10), especially a lawn and garden tractor, with two lift arms (56, 58) engaging the frame of the implement at one end, arranged transversely spaced from one another and adapted to be pivoted to the underside of the small tractor at the other end, wherein two support arms (104) are provided on the small tractor (10) in the front end region of the small tractor spaced from the pivot points of the lift arms (56, 58) at the tractor, on each of which support arms there engages a link (94), each of which is movably connected to a lift link (86) pivoted to a lift arm (56, 58), and wherein the lift arms (56, 58) are adjustable from a lowered position into a transport position, characterized in that the lift links (86) are formed as lever arms extending in the direction of travel and pivoting up- and downwardly about their points of linkage to the links (94), wherein an upwardly extending part is fixedly arranged on at least one lift link (86) at a distance from its point of linkage (88) to the associated lift arm (56 or 58) on which upwardly extending part there acts a pull member (142).

2. Device according to claim 1, characterized in that the pull member is formed as a lift rod (142) and engages a pivotable manual lever (114) at its end remote from the point of linkage to the upwardly extending part.

3. Device according to claim 2, characterized in that the lift link (86) is so pivoted to the associated lift arm (56, 58) that, on pivoting the manual lever (114) to set the lift arms (56, 58) to the transport position, the lift link (86) is moved in the clockwise direction and its point of linkage to the link (94) is moved on an arc about the point of linkage of the link (94) to the support arm (104).

4. Device according to claim 1, characterized in that the links (94) are adjustable in length.

5. Device according to claim 2, characterized in that the manual lever (114) is mounted at one end in one of the lift arms (56, 58).

6. Device according to claim 5, characterized in that the manual lever (114) is provided at its end with a plate (116), which has a pivot pin (118), which can be fitted in a tubular piece (136) connected to at least one lift arm (56, 58) and directed laterally outwards.

7. Device according to claim 6, characterized in that a guide pin (120) is provided on the plate (116) below the pivot pin (118), which guide pinis guided in a slot guide (140) open at one end of a plate (134) connected to the tubular piece (136), which plate comprises a tongue (144) cooperating with a catch (128) on the manual lever (114) for holding the‚manual lever (114) in one of its end positions.

8. Device according to one or more of the preceding claims characterized in that a spring (146) acts on one lift arm (56, 58) and acts at the other end via a cable (150) on the upwardly extending part.

9. Device according to one or more of claims 1 to 7 and claim 8, characterized in that both lift links (86) are provided with an upwardly extending part, which parts are connected by a transverse web (158), wherein the transverse web (158) receives an adjusting screw (156) with a setting nut (162), on which engages the cable (150), drawn over a guide pulley (164), at its end remote from the spring (146).

10. Device according to claim 1, characterized in that the support arms (104) bear at their rear, upper ends against the underside of a tractor axle (18) and can each be connected to a suspension bracket (30) fixed on the tractor axle.


**Revendications**

1. Dispositif pour atteler frontalement un dispositif de travail (12) à un petit tracteur (10), notamment un tracteur pour tondre le gazon et un tracteur de jardin, comportant deux bras de levage (56, 58) attaquant, par une extrémité, le cadre du dispositif de travail, distants transversalement et pouvant être articulés, par leur autre extrémité, sur la face inférieure du petit tracteur, et dans lequel dans la zone frontale du petit tracteur et à distance des points d'articulation, situés sur le tracteur, des bras de levage (56, 58), il est prévu deux bras de support (104) montés sur le petit tracteur (10) et auxquels sont accrochées des entretoises respectives (94) qui sont raccordées, avec possibilité de déplacement, à des entretoises respectives de levage (86) articulées sur les bras de levage (56, 58), et dans lequel les bras de levage (55, 58) peuvent être déplacés d'une position abaissée dans une position de transport, caractérisé en ce que les entretoises de levage (86) sont réalisées sous la forme de bras de levier qui s'étendent dans la direction de déplacement et peuvent être soulevés et abaissés par pivotement autour de leurs points d'articulation sur les entretoises (94), une partie dirigée vers le haut, à laquelle est accroché un élément de traction (142), étant montée fixe sur au moins une entretoise de levage (86), à distance du point d'articulation (88) de cette dernière sur le bras de levage associé (56 ou 58).

2. Dispositif selon la revendication 1, caractérisé en ce que l'élément de traction est réalisé sous la forme d'une barre de traction (142) et est accroché, par son extrémité tournée à l'opposé du point d'articulation sur la partie dirigée vers le haut, à un levier à main pivotant (114).

3. Dispositif selon la revendication 2, caractérisé en ce que l'entretoise de levage (86) est articulée sur le bras de de levage associé (56, 58) de telle sorte que, lors du pivotement du levier à main (114) pour le réglage des bras de levage (56, 58) dans la position de transport, l'entretoise de levage (86) est déplacée dans le sens des aiguilles d'une montre et son point d'articulation sur l'entretoise (94) est déplacé sur un cercle autour du point d'articulation de l'entretoise (94) sur le bras de support (104).

4. Dispositif selon la revendication 1, caractérisé en ce que les entretoises (94) possèdent une longueur variable.

5. Dispositif selon la revendication 2, caractérisé en ce que le levier à main (114) est tourillonné, à une extrémité, sur l'un des bras de levage (56, 58).

6. Dispositif selon la revendication 5, caractérisé en ce que le levier à main (114) comporte, à une extrémité, une plaque (116), qui possède un tourillon (118) qui peut être inséré dans un élément tubulaire (136) raccordé au moins à un bras de levage (56, 58) et guidé latéralement vers l'extérieur.

7. Dispositif selon la revendication 6, caractérisé en ce qu'au-dessous du tourillon (118) est prévue, sur la plaque (116), une tige de guidage (120), qui est guidée dans un guide en forme de fente (140), ouvert à une extrémité, d'une plaque (134) qui est raccordée à l'élément tubulaire (136) et comporte une languette (144) qui coopère avec un verrou (128) situé sur le levier à main (114) et sert à fixer ce levier dans l'une de ses positions d'extrémité.

8. Dispositif selon une ou plusieurs des revendications précédentes, caractérisé en ce qu'à un bras de levier (56, 58) est accroché un ressort (146), dont l'autre extrémité est accrochée, par l'intermédiaire d'un câble de traction (150), à la partie dirigée vers le haut.

9. Dispositif selon une ou plusieurs des revendications 1 à 7 et la revendication 8, caractérisé en ce que les deux entretoises de levage (86) sont raccordées à des parties dirigées vers le haut, qui sont reliées entre elles par l'intermédiaire d'une barre transversale (158) qui porte une vis de réglage (156) comportant un écrou de réglage (162) auquel le câble de traction (150), qui circule sur une poulie de guidage (164), est accroché au niveau de son extrémité tournée à l'opposé du ressort (146).

10. Dispositif selon la revendication 1, caractérisé en ce que les bras de support (104) s'appliquent, par leurs extrémités supérieures arrière, contre la face intérieure d'un essieu (18) du tracteur et peuvent être raccordés à des étriers suspendus respectifs (30) fixés à l'essieu du tracteur.

Fig. 1

Fig. 2

**Fig. 3**

EP 0 324 974 B1

Fig. 4